# EUROPÄISCHE PATENTSCHRIFT

(11) **EP 0 426 790 B1**
(45) Veröffentlichungstag und Bekanntmachung des Hinweises auf die Patenterteilung: **29.06.1994**
(21) Anmeldenummer: 90906183.0
(22) Anmeldetag: 21.04.1990
(51) Int. Cl.: B29C 47/92, B29C 47/50

(54) **VORRICHTUNG ZUM VERARBEITEN VON THERMOPLASTISCHEN KUNSTSTOFFEN**
DEVICE FOR PROCESSING THERMOPLASTIC SYNTHETIC MATERIALS
DISPOSITIF POUR LE FORMAGE DE MATIERES SYNTHETIQUES THERMOPLASTIQUES

(30) Priorität: 30.05.1989 DE 3917523
(43) Veröffentlichungstag der Anmeldung: 15.05.1991
(73) Patentinhaber: BECK, Erich, D-76887 Bad Bergzabern (DE)
(72) Erfinder: BECK, Erich, D-76887 Bad Bergzabern (DE)
(74) Vertreter: Konle, Tilmar, Dipl.-Ing.
(86) Internationale Anmeldenummer: EP9000643
(87) Internationale Veröffentlichungsnummer: WO9014939

(56) Entgegenhaltungen:
- EP-A- 0 014 125
- EP-A- 0 051 543
- WO-A-89/03754
- DD-A- 88 676
- DD-A- 93 020
- DE-A- 3 642 757
- DE-A- 3 833 776
- FR-A- 2 375 979
- FR-A- 2 601 283
- US-A- 4 721 589
- Kunststoffe, Band 78, Nr. 3, 1988, Carl Hanser Verlag, München, DE, G. Menges et al.: "Verbessertes Plastifiziersystem mit integrierter Zahnradschmelzepumpe", Seiten 261-268

## Beschreibung

Die Erfindung bezieht sich auf eine Vorrichtung gemäß dem Oberbegriff des Patentanspruchs 1. Eine derartige Vorrichtung ist aus der Zeitschrift "Kunststoffe", Heft 3, 1988, Aufsatz "Verbessertes Plastifiziersystem mit integrierter Zahnradpumpe"von G. Menges bekannt.

Bei Schneckenextrudern wird die Temperatur der plastifizierten Kunststoffmasse (Massetemperatur) im wesentlichen von der Knet-Energie bestimmt, welche von der Schnecke aufgebracht wird. Da die Knet-Energie proportional zur Schneckendrehzahl ist, besteht zwischen Massetemperatur und Schneckendrehzahl ein gesetzmäßiger Zusammenhang. Um einen möglichst hohen Förderwirkungsgrad zu erreichen, wird ferner bei Schneckenextrudern ein möglichst geringes Spiel zwischen Schnecke und Schneckenzylinder angestrebt, so daß die Schneckendrehzahl nicht nur die Massetemperatur, sondern auch den Massedurchsatz und Massedruck bestimmt. Da der Massedruck durch keine anderen Maßnahmen als durch die Schneckendrehzahl beeinflußt werden kann, werden Schneckenextruder in der Regel so betrieben, daß für einen gewünschten Massedruck die betreffende Schneckendrehzahl eingestellt wird. Da für diese Schneckendrehzahl die zugehörige Massetemperatur meist nicht paßt, wird das Extrudergehäuse von außen her fremdgekühlt, gelegentlich auch geheizt (DE-B-3 623 679), was indessen eine äußerst träge, erst nach einem längeren Einfahrvorgang wirksame Regelung darstellt und eine relativ ungenaue Einstellung der Massetemperatur erlaubt. Durchsatz- und Temperaturungenauigkeiten führen wiederum zu Dickenschwankungen des Extrudates.

Für einen variablen Betrieb mit varriierenden Werkzeugeinstellungen bzw. unterschiedlichen Foliendicken und damit wechselnden Massedurchsätzen sind derart lange Temperatureinregelzeiten hinderlich und teuer wegen der Ausschußproduktion.

Die genannten Unzulänglichkeiten treffen auch bei einer Kunststoffverarbeitungsvorrichtung nach dem eingangs genannten Aufsatz von G. Menges in der Zeitschrift "Kunststoffe" zu, bei welcher einem Schneckenextruder vorstehender Bauart eine Zahnradpumpe nachgeschaltet ist, um den Durchsatz der plastifizierten Kunststoffmasse und den Massedruck am Werkzeugeingang besser Konstant halten zu können. Die Drehzahlen der fördersteifen Zahnradpumpe und des ebenfalls relativ fördersteifen Schneckenextuders sind durch entsprechende Regelung starr miteinander gekoppelt, wobei die Regelgröße der Massedruck am Pumpeneingang ist. Da bereits geringe Förderschwankungen des Schneckenextruders zu starken Vordruckschwankungen an der Pumpe führen, muß die Schneckendrehzahl nachgeführt werden, um den zulässigen Pumpenvordruck nicht zu überschreiten. Die Massetemperatur ändert sich wegen der fördersteifen (= spielfreien bzw. schlupffreien) Charakteristik des Schneckenextruders entsprechend den Regeleingriffsänderungen der Schneckendrehzahl, was zur Folge hat, daß die so verursachten Temperaturschwankungen über eine Schneckenzylinderheizung und -kühlung kompensiert werden sollen. Die bereits beschriebenen Nachteile einer trägen und nicht zielsicheren Massetemperatureinstellung sind daher auch bei dieser bekannten Vorrichtung vorhanden.

In der U.S 4.721.598 wird in Spalte 5, Zeile 14, als Variante zur Heizungsregelung die Möglichkeit der Temperaturänderung durch Schneckendehzahländerung genannt. Gleichzeitig wird in Spalte 5, Zeile 40 - 43 auf die Notwendigkeit der Druck-Schneckendrehzahlverkoppelung US Pat. 4.209.476. hingewiesen.

Der Freiheitsgrad-Temperatureinstellung durch Schneckendrehzahländerung ist damit nicht gegeben.

Die Aufgabe der Erfindung besteht demgegenüber darin, bei einer Vorrichtung der eingangs erwähnten Art eine möglichst trägheitslose Einstellung und Stabilisierung der Massetemperatur für konstanten Durchsatz und Massedruck am Eingang des am Extrusionswerkzeugs zu erzielen.

Diese Aufgabe wird erfindungsgemäß durch die kennzeichnenden Merkmale des Patentanspruchs 1 gelöst.

Vorteilhafte Ausgestaltungen und Weiterbildungen der erfindungsgemäßen Vorrichtung ergeben sich aus den Unteransprüchen.

Die Erfindung geht von der Überlegung aus, nicht nur die Druckerzeugung (wie bei der Vorrichtung nach Menges), sondern auch den Durchsatz von der Schneckendrehzahl vollständig zu entkoppeln, um so den zusätzlichen Freiheitsgrad zu haben, die Schmelzetemperatur und die Homogenität der Kunststoffmasse durch Drehzahländerungen der Extruderschnecke einzustellen, und zwar bei einer für die Erzeugung von Qualitätsprodukten erforderlichen Durchsatzkonstanz. Dies gelingt im Sinne einer trägheitslosen Einstellung und Stabilisierung der Massetemperatur durch die Kombination eines förderweichen Schneckenextruders oder einer anderen, rührwerksähnlichen Förder- und Aufschmelzeinrichtung mit förderweicher Charakteristik mit einer fördersteifen Pumpe, z. B. Zahnradpumpe, mit nahezu linearem Drehzahl/Durchsatz-Verhältnis. Der förderweiche Schneckenextruder erzeugt über seinen Betriebsdrehzahlbereich unabhängig von Durchsatz einen Maximaldruck, der den zulässigen Pumpenvordruck nicht überschreitet oder zumindest in weiten Drehzahlbereichen innerhalb des zulässigen Pumpenvordrucks bleibt. Die fördersteife Pumpe sorgt dafür, daß bei wirtschaftlich vertretbaren Durchsätzen die notwendigen Massedrücke im Werkzeug auch bei niedrigem Temperaturniveau erreicht werden. Der volumetrische Förderwirkungsgrad des förderweichen Schneckenextruders ändert sich bei der genannten Betriebsweise über den gesamten Leistungsbereich sehr stark, was bewußt für die erfindungsgemäßen Zwecke ausgenutzt wird, um die Massetemperatureinstellung ausschließlich durch Änderung der Schneckendrehzahl zu bewirken. Dies setzt voraus, daß die Extruderschnecke bekannter Bauart soweit verändert wird, daß sie die Betriebscharakteristik eines kontinuierlichen Rührwerks (Schlupfläufer mit geringer Druckerzeugung) annimmt und der Schmelzebzw. Massedurchsatz durch die nachgeschaltete fördersteife Schmelzpumpe exakt einstellbar ist. Diese Veränderung der Extruderschnecke erfolgt durch eine starke Vergrößerung des Schneckenspiels, wodurch der Schmelze- und Homogenisiermechanismus nicht mehr im wesentlichen durch die transversale Schneckenkanalströmung, sondern durch mehrmaliges Überströmen der Schneckenstege oder Mischelemente bewirkt wird. Die Förderwirksamkeit wird dadurch so stark abgesenkt,daß der Schneckendruckaufbau über den gesamten Drehzahlbereich auf niedrigem, dem zulässigen Vordruck der Schmelzepumpe entsprechendem Niveau bleibt. Die Mindestdrehzahl des förderweichen Schneckenextruders ist gegeben durch den Mindestdruck, der zur vollständigen Füllung der fördersteifen Schmelzepumpe erforderlich ist. Bei diesem unteren Grenzdruck kann die minimale Massetemperatur erreicht werden. Durch Drehzahlsteigerung bis zum oberen Grenzwert (=zulässiger maximaler Pumpenvordruck) bei gleichbleibendem Durchsatz erreicht die Massetemperatur ihren maximalen Einstellwert.

Die Erfindung wird nachstehend anhand der Zeichnungen näher erläutert. Es zeigt:
- Fig. 1: einen schematischen Längsschnitt durch ein Ausführungsbeispiel der erfindungsgemäßen Vorrichtung zum Verarbeiten von thermoplastischen Kunststoffen, bestehend aus einem förderweichen Schneckenextruder und einer nachgeschalteten fördersteifen Zahnradpumpe, und
- Fig. 2: ein Diagramm für den Verlauf der Massetemperatur in Abhängigkeit von der Drehzahl des Schneckenextruders gemäß Fig. 1 für vier verschiedene Durchsatzwerte.

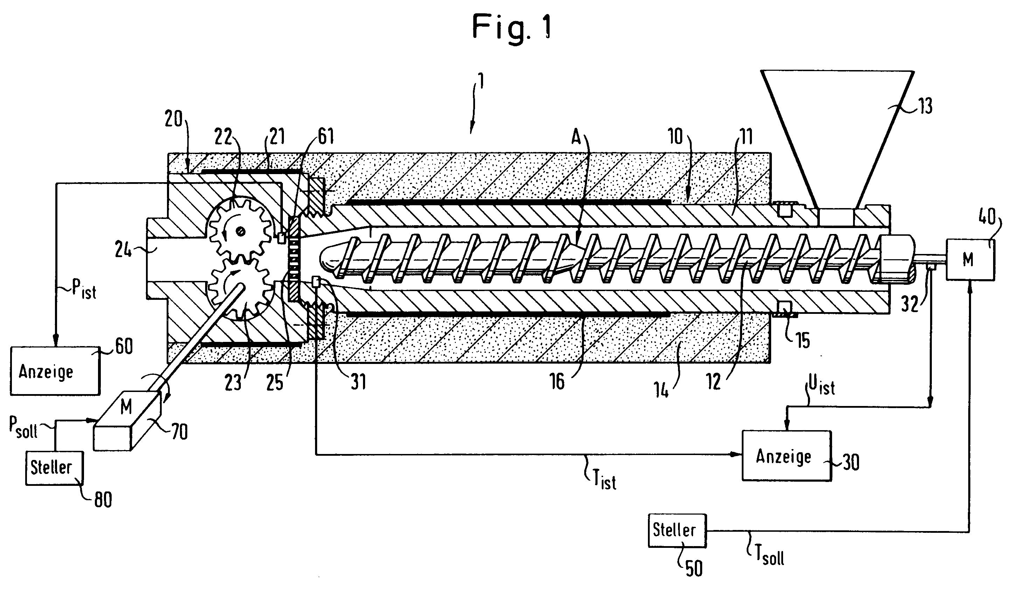

Die in Fig. 1 dargestellte Vorrichtung 1 verarbeitet thermoplastische Kunststoffe, wie beispielsweise LDPE (= low density polyethylene bzw. Polyäthylen niedriger Dichte) oder HDPE (=high density polyethylene bzw. Polyäthylen hoher Dichte). Diese Kunststoffe werden in rieselfähiger Gestalt, insbesondere als Granulat, einem Aufgabetrichter 13 der Vorrichtung 1 zugeführt, wo sie aufgeschmolzen (plastifiziert) und einem nicht dargestellten Werkzeug mit definiertem Durchsatz und konstantem Massedruck zugeführt werden.

Die Vorrichtung 1 umfaßt im dargestellten Beispielsfalle einen Schneckenextruder 10, welchem eine Zahnradpumpe 20 nachgeschaltet ist. Der Schneckenextruder 10 besteht im wesentlichen aus einem Extrudergehäuse (Schneckenzylinder) 11 mit darin gelagerter Extruderschnecke 12, die im gezeigten Ausführungsbeispiel zwei Schnecken - gänge aufweist. Die Schneckenstege weisen zu der Innenwand des Extrudergehäuses 11 ein großes Spiel auf. Im Bereich A weist die Extruderschnecke eine Kurzkompressionszone auf, auf welche an anderer Stelle noch näher eingegangen wird. Infolge des großen Spiels zeigt die Extruderschnecke 12 eine förderweiche Charakteristik, wie bereits an anderer Stelle ausführlich erläutert wurde.

Am Ende des Schneckenextruders 10 ist im dargestellten Beispielsfall die Zahnradpumpe 20 angeflanscht, welche eine fördersteife Charakteristik hat. Sowohl der Schneckenextruder 10 als auch die Zahnradpumpe 20 sind von einer Mantelisolierung 14 umgeben, um möglichst wenig umgesetzte Wärme nach außen an die Umgebung abzuführen.

Zur Vorheizung des Extrudergehäuses 11 und der Zahnradpumpe 20 vor Betriebsbeginn sind auf den jeweiligen Außenflächen der Gehäuse Heizmanschetten 16 bzw. 21 aufgebracht, welche mit einem nicht gezeigten Temperaturregelkreis verbunden sind, um das Gehäuse 11 auf die gewünschte Betriebstemperatur vorzuheizen. Ferner befindet sich am Extrudergehäuse 11 unmittelbar am Einlauf ein Kühlring 15, um einen Rückfluß von Schmelze in den Einlaufbereich der Extruderschnecke 12 zu verhindern.

Die Zahnradpumpe 20 weist zwei gegenläufig rotierende, miteinander kämmende Förderzahnräder 22, 23 auf, wobei sich die Zahnräder 22, 23 in Verlängerung der Drehachse der Extruderschnecke 12 treffen. Dementsprechend stellt der Förderkanal 24 der Pumpe 20 die unmittelbare Verlängerung der Innenbohrung des Extrudergehäuses 11 dar. Am Übergang zwischen Extrudergehäuse 11 und Zahnradpumpe 20 befindet sich vor dem Förderkanal 24 ein Schutzsieb 25, welches den Eintritt von Fremdkörpern in die Pumpe 20 verhindert.

Am Ausgang der Innenbohrung des Extrudergehäuses 11 ist ein Temperaturmeßfühler 31 angebracht, um die momentane Temperatur der plastifizierten und homogenisierten Kunststoffmasse beim Austritt aus dem Schneckenextruder 10 als elektrisches Signal zu erfassen und auf einer Anzeige 30 anzuzeigen. Der Anzeige 30 wird ferner die momentane Drehzahl Uᵢₛₜ der Extruderschnecke 12 über einen Tachogenerator 32 zugeführt. Über einen Steller 50 wird die Drehzahl des Antriebsmotors 40 der Extruderschnecke 12 solange verstellt, bis auf der Anzeige 30 die gewünschte Massetemperatur angezeigt wird.

Am Ausgang des Förderkanals 24 der Zahnradpumpe 20 ist ein Druckmeßfühler 61 angebracht, um den Massedruck beim Eintritt in die Pumpe 20 als Maß für den Durchsatz zu erfassen. Das Meßsignal Pᵢₛₜ für den momentanen Massedruck wird einer Anzeige 60 zugeleitet. Über einen Steller 80 wird die Drehzahl des Antriebsmotors 70 der Zahnradpumpe 20 solange verstellt, bis auf der Anzeige 60 der gewünschte Massedruck bzw. Durchsatz angezeigt wird.

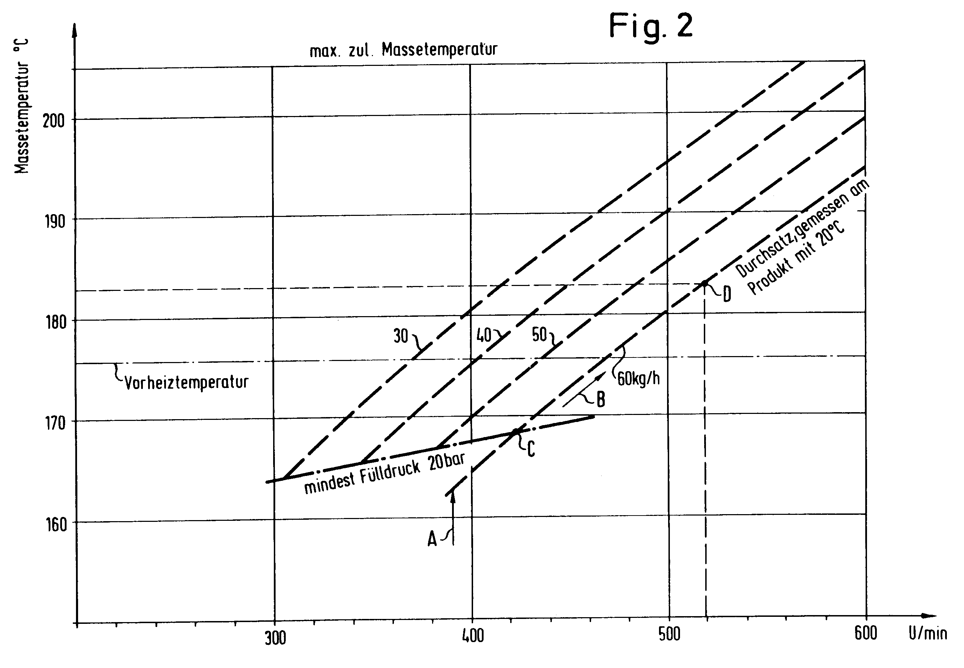

Anhand des Diagramms nach Fig. 2 soll erläutert werden, daß die Stabilisierung der Massetemperatur autostatisch im Gleichgewicht zwischen mechanischen Antriebsleistung und Enthalpiezuwachs der Schmelze erfolgt. Das Diagramm nach Fig. 2 wurde bei einer Vorrichtung gemäß Fig. 1 mit einem Schneckendurchmesser von 40 mm für Polyäthylen niedriger Dichte (LDPE) mit einem Schmelzindex Mfi (melt flow index) von 0,7 für vier unterschiedliche Durchsatzleistungen 30 kg/h, 40 kg/h, 50 kg/h und 60 kg/h aufgenommen. Bei einem Durchsatz von z. B. 50 kg/h wurde über einen Schneckendrehzahlbereich von 380 bis 530 Upm ein Massetemperaturbereich von 167 bis 189 °C durchfahren. Der dazugehörige Pumpenvordruck (Massedruck am Eingang der Zahnradpumpe 20) lag dabei zwischen 20 und 100 bar.

Da der Schneckenextruder 10 quasi-adiabatisch betrieben wird, ist die Drehzahl/Temperaturreaktion praktisch trägheitslos. Die auftretenden Druckschwankungen zwischen Schneckenextruder 10 und Zahnradpumpe 20 betragen im praktischen Produktionsbetrieb nur wenige bar. Infolge der Entkopplung von Schnecken- und Pumpendrehzahl lassen sich Energieumsatz (Temperatur) und Durchsatz unabhängig voneinander einstellen. Da das Energieumsatzgeschehen im Schneckenextruder 10 von innen nach außen abläuft, wäre eine Temperaturführung des Extrudergehäuses durch Heizungsregelung nur störend. Durch die möglichst gute Isolierung von Extruderschnecke 10 und Zahnradpumpe 20 wird neben der Schaffung eines quasi-adiabatischen Systems der weitere Vorteil eines verringerten Energieverlustes nutzbar gemacht.

Die Einstellung der Temperatur erfolgt in der Weise, daß zunächst der gewünschte Durchsatz durch Vorgabe der Pumpendrehzahl (Steller 80; Fig. 1) eingestellt wird (Pfeil A im Diagramm für 60 kg/h gemäß Fig. 2). Die Massetemperaturfestsetzung erfolgt durch Einstellung der Extruderdrehzahl entsprechend der Temperaturvorgabe am Steller 50 (Pfeil B über Punkt C in Fig. 2, bei dem der Mindestdruck zur Befüllung der Zahnradpumpe 20 und die Mindesttemperatur von 168 °C herrschen). Durch weitere Steigerung der Schneckendrehzahl bis Punkt D wird die gewünschte Temperatur von 182 °C erreicht. Da die Temperaturmessung unmittelbar am Schneckenende erfolgt (Meßfühler 31), verläuft die Drehzahl/Temperatur-Reaktion (entsprechend dem Zusammenhang zwischen mechanischen Energieumsatz und Enthalpie-Zuwachs) praktisch trägheitslos.

Die Stabilisierung der eingestellten Temperatur ergibt sich indirekt über die Viskosität der Kunststoffmasse in der Weise, daß jede Abweichung der dem jeweiligen Betriebszustand entsprechenden Viskosität und der mit ihr korrespondierenden Massetemperatur eine Änderung der Leistungsaufnahme der Extruderschnecke und damit eine entsprechende Änderung der in der Masse erzeugten Wärme zur Folge hat, welche die genannte Abweichung wieder rückgängig macht. Die Extruderschnecke 12 arbeitet hierbei als eine Art "Viskositätsfühler". Bei einem einmal eingestellten Betriebszustand besteht ein fester Zusammenhang Viskosität/Schneckenumfangsgeschwindigkeit/Massetemperatur. Solange ein in relativ engen Grenzen gleichmäßiger thermoplastischer Kunststoff entsprechend heutigem Herstellerstandard eingespeist wird, bedeutet gleiche Viskosität bei gleicher Schergeschwindigkeit auch gleiche Temperatur. Erfahrungsgemäß bewegen sich die Temperaturabweichungen bei den heute üblichen Typrohstoffen um 1 °C. Eine bewußt herbeigeführte Viskositätsänderung, z. B. durch einen Wechsel des Materials LDPE von Mfi 0,3 auf Mfi 1,5 führt innerhalb von Sekunden zu einer Temperaturabsenkung auf einen, den geänderten Bedingungen entsprechenden Wert. Eine gewünschte Änderung der sich selbst einstellenden Temperatur kann nunmehr auf gleiche Weise durch Neufestsetzung der Schneckendrehzahl herbeigeführt werden.

Erfahrungsgemäß funktioniert die geschilderte Temperaturstabilisierung auch für Mischungen, z. B. aus LDPE und HDPE, sowie für andere thermoplastische Kunststoffe mit ähnlich unterschiedlichen Mfi-Werten. Dies ist damit zu erklären, daß die Extruderschnecke 12 mit einem Drehmoment belastet wird, das sich aus der Mischviskosität, der Temperaturdifferenz zwischen Ein- und Auslauftemperatur für die LDPE-Komponente und der Temperaturdifferenz zwischen Ein- und Auslauftemperatur für die HDPE-Komponente ergibt.

Die Rückrechnung aus Antriebsleistung und Schneckendrehzahl ergab beispielsweise für eine Temperaturdifferenz von 20°C zwischen Einlauftemperatur (160 °C) und Auslauftemperatur (180 °C) bei LDEP einen Mischviskositätswert von etwa dem 10-Fachen der Schmelzeviskosität am Schneckenausgang. Kommen hingegen Kunststoffmischungen mit nicht gleichmäßigem Regenerat oder Regenerate mit verschiedenen Mfi-Werten zur Verarbeitung, dann erkennt man an den auftretenden Massetemperaturschwankungen die Unterschiede in den Mfi-Werten. Indessen kann im Falle der Herstellung von Blasfolien trotz Schwankungen des Mfi-Wertes die Blasenstabilität und damit die Produktqualität durch den geschilderten Stabilisierungsmechanismus mit Viskosiatätskonstanz in engeren Grenzen gehalten werden als dies der Fall wäre, wenn eine Massetemperaturstabilität mit starken Viskositätsänderungen einherginge.

Selbstverständlich ist auch bei Schmelzepumpen die Änderung der Dichte mit der Massetemperatur und damit des Durchsatzes zu berücksichtigen. Diese Durchsatzabweichung bei konstanter Pumpendrehzahl kann aber über die Schlupfänderung kompensiert werden durch eine sich selbst einstellende Änderung des Differenzdrucks zwischen Einund Ausgang der Pumpe. Wird z. B. die Massetemperatur gemäß Fig. 2 von 168 °C auf 182 °C durch Änderung der Schneckendrehzahl von 425 U/min auf 520 U/min erhöht (Pfeil B), so vermindert sich die Dichte und damit der Durchsatz um (gemessene) 1,4 %. Die gleichzeitig der Pumpenvordruck (Fülldruck) von 20 bar auf 70 bar ansteigt und Viskositätsabnahme vermindert wird, reduziert sich der Pumpendruckdifferenz und damit der Schlupfwert. Eine nahezu vollständige Kompensation kann durch geeignete Auswahl der Schneckenschlupfmaße erreicht werden.

Die vorstehend im Zusammenhang mit Fig. 1 erwähnte Verwendung einer Kurzkompressionszone am Schneckenanfang hat den Zweck, die Verweilzeitspektren in der Feststoff- und in der Schmelzephase dadurch einzuengen, daß die Phasentrennung auf den Umfang einer mehrgängigen Schnecke verlegt wird. Gegenüber einer Phasentrennung mit Trennlinie entlang des Schneckenganges ist das Verweilzeitspektrum bei einer Phasentrennung auf dem Schneckenumfang wesentlich schmäler. Diese Einengung des Verweilspektrums geht einher mit einer äußerst gleichmäßigen Umwandlung des aufgegebenen Kunststoffmaterials von der Fest- in die Flüssigphase.

## Patentansprüche

1. Vorrichtung zum Verarbeiten von thermoplastischen Kunststoffen, mit
- einer Förder- und Aufschmelzeinrichtung (10) für granulatförmiges Kunststoffmaterial, und
- einer von der Förder- und Aufschmelzeinrichtung (10) mit plastifizierter Kunststoffmasse gespeisten fördersteifen Pumpe (20), deren Durchsatz/Drehzahl-Verhältnis im wesentlichen proportional verläuft, **dadurch gekennzeichnet**, daß die Drehzahl der Pumpe (20) von der Antriebsdrehzahl der Förder- und Aufschmelzeinrichtung (10) entkoppelt ist und entsprechend dem gewünschten Durchsatz der Kunststoffverarbeitungsvorrichtung (1) einstellbar ist, daß die Förder- und Aufschmelzeinrichtung (10) förderweich ausgebildet ist und die Betriebscharakteristik eines kontinuierlichen Rührwerkes hat, derart, daß sich ihr volumetrischer Förderwirkungsgrad über den Drehzahlbereich stark ändert, daß die Zufuhr von granulatförmigem Kunststoffmaterial derart erfolgt, daß die förderweiche Förder- und Aufschmelzeinrichtung (10) im gesamten Drehzahlbereich vollständig gefüllt ist und soviel Kunststoffmasse fördert, daß der Mindestfülldruck der Pumpe (20) erreicht ist, daß der Maximaldruck der förderweichen Förder- und Aufschmelzeinrichtung (10) zumindest in weiten Drehzahlbereichen unterhalb des gewünschten Vordrucks der fördersteifen Pumpe (20) gehalten wird, und daß die Temperatur der plastifizierten Kunststoffmasse durch entsprechende Wahl der Drehzahl der Förder- und Aufschmelzeinrichtung (10) einstellbar ist wobei am Ausgang der Innenbohrung des Extruder gehaüses 10 ein Temperaturmessfühler 31 angebracht ist, wobei der eingestellte Betriebspunkt der Förder- und Aufschmelzeinrichtung (10) dem Gleichgewichtszustand zwischen eingetriebener mechanischer Leistung und der Summe aus Enthalpiezuwachs der Kunststoffmasse und Verlustleistung entspricht und selbststabiliert ist.

2. Vorrichtung nach Anspruch 1, **dadurch gekennzeichnet**, daß die Förder- und Aufschmelzeinrichtung (10) gegenüber der Umgebung wärmeisoliert ausgebildet ist.

3. Vorrichtung nach Anspruch 1 oder 2, **dadurch gekennzeichnet**, daß bei Verwendung eines Schneckenextruders als Förder- und Aufschmelzeinrichtung (10) ein stark vergrößertes Spiel zwischen dem Außendurchmesser der Schnecke (12) und dem Innendurchmesser des Extrudergehäuses (12) vorgesehen ist, derart, daß die Schmelz- und Homogenisierwirkung im wesentlichen durch mehrmaliges Überströmen der Schneckenstege und nur in geringem Maße durch die transversale Schneckenkanalströmung erzielt und die Förderwirksamkeit so stark abgesenkt wird, daß der Schneckendruckaufbau über den gesamten Drehzahlbereich auf niedrigem Niveau bleibt.

4. Vorrichtung nach einem der Ansprüche 1 bis 3, **dadurch gekennzeichnet**, daß bei Verwendung eines Schneckenextruders mit mehrgängiger Schnecke als Förder- und Aufschmelzeinrichtung (10) eine Kurzkompressionszone am Schneckenanfang vorgesehen ist.

## Claims

1. Apparatus for the processing of thermoplastic synthetic materials with
- a conveying and melting apparatus (10) for granulated plastic material and
- a stiff conveying pump (20) the throughput/revolutions per minute ratio runs substantially proportionally fed with plasticized plastic mass by the conveying and melting apparatus, characterised in that the speed of the pump (20) balanced by the driving speed of the conveying and melting apparatus (10) and is adjustable corresponding to the desired throughput of the plastics processing apparatus (1), that the conveying and melting apparatus (10) is formed soft conveying and has the operating chracteristic of a continuous stirring mechanism such that its volumetric conveying efficiency greatly varies over the speed range, that the supply of granulated plastic material is effected such that the soft conveying conveying and melting apparatus (10) in the whole speed range is completely filled and conveys so much plastic mass that the minimum full pressure of the pump (20) is reached, that the maximum pressure of the soft conveying conveying and melting apparatus (10) is kept at least in wide speed ranges below the desired prepressure of the stiff conveying pump (20) and that the temperature of the plasticized plastic mass is adjustable by corresponding choice of the speed of the conveying and melting apparatus (10) whereby at the outlet of the inside bore of the extruder housing a temperature measuring feeler 37 is fitted whereby the adjusted operating point of the conveying and melting apparatus (10) corresponds to the equilibrium state between driven in mechanical power and the sum of the enthalpy increase of the plastic mass and power dissipation and is self stabilized.

2. Apparatus according to claim 1, characterised in that the conveying and melting apparatus (10) is formed heat insulated in respect of the environment.

3. Apparatus according to claim 1 or 2, characterised in that with the use of a screw extruder as conveying and melting apparatus (10) a very enlarged clearance between the outer diameter of the screw (12) and the inner diameter of the extruder housing (12) is provided such that the melting and homogenizing action is achieved essentially by repeated over flowing of the screw bars and only to a small extent by the transversal screw channel flow and the conveying effectiveness is so greatly reduced that the screw pressure build up over the whole speed range remains at a low level.

4. Apparatus according to one of the claims 1 to 3, chracterised in that with the use of screw extruder with multiple threaded screw as conveying and melting apparatus (10) a short compression zone at the beginning of the screw is provided.

## Revendications

1. Dispositif pour traiter des matières thermoplastiques, comportant
- un dispositif (10) d'entraînement et de fusion d'une matière plastique sous forme de granulés, et
- une pompe (20) produisant un refoulement élevé et qui est alimentée en matière plastique plastifiée par le dispositif d'entraînement et de fusion (10) et dont le rapport débit/vitesse de rotation a une allure essentiellement proportionnelle, caractérisé en ce que la vitesse de rotation de la pompe (20) est découplée de la vitesse de rotation d'entraînement du dispositif d'entraînement et de fusion (10) et peut être réglée en fonction du débit désiré du dispositif (1) de traitement de la matière plastique, que le dispositif d'entraînement et de fusion (10) est réalisé de manière à réaliser un faible refoulement et possède la caractéristique de fonctionnement d'un dispositif agitateur fonctionnant continûment, de sorte que son débit de refoulement volumétrique varie fortement dans la gamme des vitesses de rotation, que l'alimentation en matière plastique à l'état de granulés s'effectue de telle sorte que le dispositif d'entraînement et de fusion (10) produisant un faible refoulement soit complètement rempli dans l'ensemble de la gamme des vitesses de rotation et refoule une masse telle de matière plastique que la pression de remplissage minimal de la pompe (20) soit atteinte, que la pression maximale du dispositif d'encraînement et de fusion (10) produisant un faible refoulement est maintenue, au moins dans des gammes étendues de vitesses de rotation, inférieure à la pression amont désirée de la pompe (20) produisant un refoulement élevé, et que la température de la masse de matière plastique plastifiée peut être réglée au moyen d'un choix correspondant de la vitesse de rotation du dispositif d'entraînement et de fusion (10), un capteur de température (31) étant disposé à la sortie de l'alésage intérieur du boîtier (10) de l'extrudeuse, tandis que le point de fonctionnement réglé du dispositif d'entraînement et de fusion (10) correspond à l'état d'équilibre entre la puissance mécanique injectée et la somme de l'accroissement de l'enthalpie de la matière plastique et de la puissance dissipée et est stabilisé de façon automatique.

2. Dispositif selon la revendication 1, caractérisé en ce que le dispositif d'entraînement et de fusion (10) est réalisé de manière à être thermiquement isolé vis-à-vis de l'environnement.

3. Dispositif selon la revendication 1 ou 2, caractérisé en ce que, dans le cas de l'utilisation d'une extrudeuse à vis en tant que dispositif d'entraînement et de fusion (10), il est prévu un jeu fortement accru entre le diamètre extérieur de la vis (12) et le diamètre intérieur du carter (12) de l'extrudeuse de sorte que l'action de fusion et d'homogénéisation est obtenue essentiellement grâce à un débordement, exécuté à plusieurs reprises, par-dessus les filets de la vis et, seulement à un faible degré, par l'écoulement transversal dans les gorges de la vis, et le rendement d'entraînement est réduit si fortement que la pression établie dans la vis reste à un faible niveau sur l'ensemble de la gamme des vitesses de rotation.

4. Dispositif selon l'une des revendications 1 à 3, caractérisé en ce que dans le cas de l'utilisation d'une extrudeuse à vis comportant une vis à plusieurs filets en tant que dispositif d'entraînement et de fusion (10), une courte zone de compression est prévue au début de la vis.
